# DEMANDE DE BREVET EUROPEEN

(11) **EP 2 397 998 A1**
(43) Date de publication de la demande: **21.12.2011**
(21) Numéro de dépôt: 10305652.9
(22) Date de dépôt: 17.06.2010
(51) Int. Cl.: G07C 9/00, H04W 88/00

(54) **Procédé et système de contrôle du traitement de plusieurs flux de communication radiofréquence par une carte à circuits intégrés**

(71) Demandeur: Gemalto SA, 92190 Meudon (FR)
(72) Inventeur: Thill, Michel, 78340, Les Clayes sous Bois (FR); Marseille, François-Xavier, 78160, Marly le Roi (FR)

(57) **Abrégé**

La présente invention concerne un procédé de traitement de plusieurs flux de communication radiofréquence par une carte à circuits intégrés (2), lesdits flux provenant d'au moins deux terminaux (T1, T2), ladite carte étant connectée à un dispositif (PB1, PB2) doté de moyens de communication radiofréquence (BT1, BT2, BT3), aptes à connecter plusieurs terminaux hôtes (BT1, BT2) ;

Le procédé se distingue en ce que ledit procédé comprend l'étape suivante de contrôle de la réception et/ou transmission (100, 200, 400) à la carte d'un premier et second flux de données provenant respectivement d'un premier (T1) et second (T2) terminal hôte, ladite étape de contrôle comprenant une étape de vérification de disponibilité (200) de la carte avant la transmission à la carte du second flux de données.

L'invention concerne également le système et dispositif de contrôle correspondant.

## Description

L'invention concerne un procédé et système de contrôle du traitement de plusieurs flux de communication radiofréquences par une carte ou objet sécurisé à circuits intégrés. Des flux distincts peuvent provenir d'au moins deux terminaux hôtes, la carte étant connectée à un dispositif doté de moyens de communication radiofréquence aptes à communiquer avec ces terminaux.

L'invention concerne particulièrement le domaine du contrôle d'accès physique (locaux, bâtiments...) et/ou logique (PC, téléphone, PDA, réseaux...) à l'aide de cartes à circuits intégrés ou badges.

L'invention trouve application non limitative notamment dans un dispositif porte badge comportant une interface carte à circuits intégrés et permettant un accès sécurisé à des équipements ou à des services via ces équipements. Le dispositif de badge d'authentification communicant sera pris comme exemple afin de démontrer la nature de l'invention. Néanmoins, tout autre dispositif, autonome en énergie et disposant d'une interface de communication radiofréquence sera susceptible d'implémenter l'invention décrite ci-après.

Au vu de la multiplicité de terminaux au service d'un utilisateur, il est apparu un besoin de permettre en même temps un accès logique et/ou logique sécurisé de ces terminaux à l'aide d'un seul objet à circuits intégrés.

L'invention prévoit dans son principe un moyen embarqué dans un dispositif portable, sous forme logicielle et/ou matérielle, configuré pour faire communiquer deux terminaux de communication radiofréquence moyenne portée avec un objet à circuits intégrés tel qu'une carte à puce connecté au dispositif.

Plus particulièrement, l'invention prévoit de contrôler les flux destinés à entrer et/ou à sortir au niveau de l'objet à circuits intégrés ; A cet effet, elle comprend des moyens électroniques et/ou logiciels permettant :
- de contrôler ou traiter, notamment par séquence, plusieurs flux de données (requêtes / commandes) provenant du monde radiofréquence, (tel que Bluetooth), pour les délivrer à la carte à circuits intégrés afin d'avoir plusieurs accès sécuritaires à différents terminaux par exemple un ordinateur personnel et un téléphone intelligent en même temps, à l'aide d'une unique carte à puce (badge d'entreprise par exemple) connecté à un lecteur porte badge,
- et d'organiser et ou gérer les réponses de la carte à circuits intégrés pour les rediriger vers le bon terminal hôte selon un canal (Bluetooth) approprié.

Selon différents modes de réalisation ou caractéristiques, pour exécuter les deux opérations au-dessus, l'invention prévoit de préférence deux types d'architecture Bluetooth : une architecture comprenant une seule puce Bluetooth à plusieurs canaux (selon le nombre de terminaux Bluetooth) ou une autre architecture comprenant plusieurs puces Bluetooth (un terminal Bluetooth par puce).

L'invention prévoit dans un mode préféré d'utiliser la capacité « hôte multiple » des puces Bluetooth (c.-à-d. la capacité d'un dispositif Bluetooth à être connecté en tant qu'esclave à plusieurs maîtres) et d'ajouter des moyens de contrôle et/ou gestion des échanges de flux (notamment requêtes / commandes / réponses) pour offrir des accès multiples à partir d'un badge ou équivalent.

Elle prévoit une exécution partielle et/ou séquencée des commandes / requêtes (notamment APDU) des différents terminaux ; Elle prévoit de préférence, une transmission des données selon des canaux logiques (un par hôte) pour permettre une instanciation multiple sur une carte à puce; L'invention prévoit de préférence, un stockage provisoire des requêtes quand une requête d'un autre terminal hôte est en cours de traitement par la carte à circuits intégrés.

Par ailleurs, l'invention prévoit également selon un mode préféré, un contrôle du flux vers la ou les puces Bluetooth de manière à rediriger les réponses vers le bon terminal hôte ; L'invention peut prévoir de traiter une étape ou information de redirection dans les moyens de contrôle, exploitée éventuellement par la suite par les puces radiofréquences. Les réponses de la carte peuvent être encapsulées pour être redirigées vers le bon terminal hôte notamment dans le cas d'une seule puce Bluetooth. Dans le cas de deux puces Bluetooth, une fois que l'une ou l'autre puce Bluetooth est sélectionnée par le contrôleur de flux, la réponse est dirigée automatiquement vers le bon terminal hôte.

Grâce à ces dispositions, l'invention a pour avantage d'éviter une utilisation de plusieurs badges (un par accès). Le cas échéant, les moyens de contrôle peuvent être indépendants des puces Bluetooth de manière à permettre une utilisation des puces Bluetooth standards sans modification.

L'invention a donc pour premier objet un procédé contrôle du traitement de plusieurs flux de communication radiofréquences par une carte à circuits intégrés, lesdits flux provenant d'au moins deux terminaux, ladite carte étant connectée à un dispositif doté de moyens de communication radiofréquence, aptes à connecter plusieurs terminaux hôtes, caractérisé en ce que ledit procédé comprend l'étape suivante :
- de contrôle de la réception et/ou transmission à la carte d'un premier et second flux de données provenant respectivement d'un premier et second terminal hôte, ladite étape de contrôle comprenant une étape de vérification de disponibilité de la carte avant la transmission à la carte du second flux de données.

Selon d'autres caractéristiques :
- L'étape de contrôle bloque les requêtes de mise à zéro quand la carte n'est pas disponible et organise un renvoi d'une réponse (ATR) à la place de la carte, évitant ainsi une opération non désirée et/ou perturbatrice d'une session en cours ;
- Le procédé met en oeuvre une étape de contrôle de la réponse de la carte au terminal hôte, ce qui permet notamment d'atteindre le bon terminal soit via un format, protocole, adresse ou port I/O;
- Le contrôle de la réponse comprend notamment une opération de redirection de la réponse de la carte vers le terminal hôte émetteur correspondant ;
- Un canal logique de communication est affecté à chaque session de communication ouverte avec un terminal hôte ou réception d'un nouveau flux ce qui permet notamment d'effectuer une bonne redirection de la réponse vers le bon terminal;
- Dans le cas de l'utilisation d'une seule puce de communication présentant une capacité d'hôtes multiples, le procédé comprend une étape conservation d'une indication de redirection dans la puce de communication ;
- Dans le cas de plusieurs puces de communication, le procédé réalise une étape de conservation d'une indication de l'origine des flux;
- Le second flux du terminal est transmis en tout état de cause à la carte après un temps déterminé alloué pour la réponse au premier flux du terminal, évitant ainsi tout blocage. Le cas échéant, une requête de mise à zéro RESET peut être générée automatiquement à destination de la carte par les moyens de contrôle ou être débloquée.
- les moyens de contrôle des flux peuvent comporter un registre d'état ou un historique des flux transmis et/ou reçus de la carte de manière à gérer correctement les flux en cours et/ou en attente de traitement par la carte.

L'invention a également pour objet le système et dispositif correspondant au procédé ou destiné à sa mise en oeuvre ; Elle a pour objet un dispositif de contrôle de traitement de plusieurs flux de communication radiofréquence par un objet à circuits intégrés, ledit dispositif étant connecté ou destiné à être connecté à cet objet, ledit dispositif comprenant ou étant destiné à connecter des moyens de communication radiofréquence configurés pour connecter plusieurs terminaux hôtes émetteurs desdits plusieurs flux ;

Le dispositif se distingue en ce qu'il comprend des moyens de contrôle de la réception et/ou transmission à la carte d'un premier et second flux de données provenant respectivement d'un premier et second terminal hôte, lesdits moyens de contrôle de réception et/ou transmission étant configurés pour effectuer une vérification de disponibilité de la carte avant transmission à la carte du second flux de données.

D'autres caractéristiques et avantages de la présente invention apparaîtront plus clairement à la lecture de la description qui suit en relation avec les dessins annexés correspondants dans lesquels:
- La figure 1 est une vue d'un système de communication selon un premier mode de réalisation de l'invention;
- La figure 2 est une vue d'un système de communication selon un second mode de réalisation de l'invention;
- La figure 3 illustre des étapes du procédé de l'invention relatif à la gestion de la mise à zéro conforme à un mode de mise en oeuvre de l'invention.
- La figure 4 illustre des étapes du procédé de l'invention relatif à la gestion de plusieurs flux conforme à un mode de mise en oeuvre de l'invention.

### DESCRIPTION DETAILLEE DE L'INVENTION

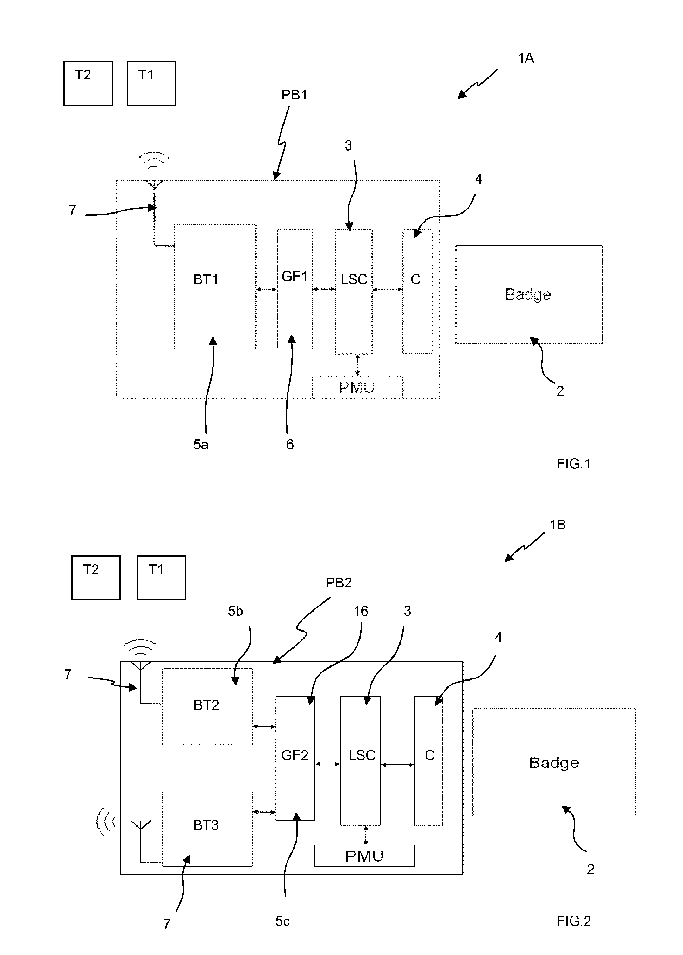

La figure 1 illustre un système 1A conforme à un premier mode de réalisation de l'invention ; Il comprend un dispositif porte badge PB1 comprenant un lecteur de carte (LSC, 3) qui comprend une interface de communication avec un objet d'identification ou objet de sécurité contenant des droits d'accès logique et /ou physique. L'interface comprend dans l'exemple une interface ISO 7816 et un connecteur C apte à connecter un badge 2, ici sous forme de carte à puce électronique. D'autres types de badge et d'interfaces correspondantes sont possibles tels qu'une clé USB, dongle, module sans-contact, NFC, composant de sécurité soudé dans le porte badge. Dans la description, la carte utilisée comme exemple est remplaçable par tout objet sécurisé communiquant à circuits intégrés. De même, des moyens de communication Bluetooth pourront être substitués par tout autre moyen de communication radiofréquence. Dans la description et revendication le mot carte à puce est donc équivalent à un objet à circuits intégrés sécurisé.

Le porte badge PB1 comporte au moins un moyen de communication Bluetooth (BT1, 5a). Ce moyen peut comporter une puce de circuit intégré ou un processeur Bluetooth. Il peut comprendre également un microcontrôleur comportant un module de communication Bluetooth intégré. Le moyen de communication (BT1) est relié à au moins une interface physique comportant une antenne 7 et est destiné notamment à établir une communication, avec un terminal hôte T1 tel qu'un ordinateur et/ou une imprimante, un assistant personnel, un téléphone, etc.

Le porte badge comprend également une unité de gestion des ressources d'alimentation PMU et le cas échéant un interrupteur de mise en tension (non représenté).

Ce terminal hôte T1 comporte également des moyens de communication Bluetooth et interface correspondants. Bien que la communication soit en l'occurrence de type Bluetooth, elle pourrait être tout autre comme Wifi, Zigbee, ou tout autre moyen de communication radio fréquence moyenne portée par exemple inférieure à 500 m voire 100 m.

Selon ce mode de l'invention, la communication vise ici à autoriser l'usage de tout ou partie des fonctions du terminal hôte. La communication est par exemple une session d'identification / authentification et/ou de présence d'un droit notamment dans le badge d'un utilisateur qui permet l'utilisation éventuellement partagée du terminal ou un accès logique.

Le dispositif et le terminal, dans l'exemple, peuvent comprendre des moyens de mise en oeuvre d'une étape d'initialisation ou d'appairage entre eux. Cette étape permet de sécuriser la communication ultérieure et/ou d'éviter des perturbations avec d'autres communications environnantes. L'appairage consiste en un échange de secret, de clé de chiffrement, ou d'identifiant entre l'objet portable et le terminal de manière à échanger ultérieurement de manière codée ou pour reconnaitre et autoriser un usage du terminal ; Il permet la mise en oeuvre d'un canal sécurisé logique entre le terminal et le dispositif.

Cette étape est ici mise en oeuvre par l'intermédiaire d'un programme ou application d'appairage / initialisation contenu dans une mémoire programmable du microcontrôleur notamment Bluetooth (BT1, 5a) ou d'autres technologies radiofréquences. Le terminal distant T1 de son côté contient un programme ou application logicielle correspondante dans un microcontrôleur adapté.

Les procédures standardisées d'initialisation des échanges, d'organisation de leur séquence et déroulement des échanges sont faites de telle sorte qu'à l'heure actuelle une carte à puce à contact ne peut entreprendre qu'une session de communication qu'avec un terminal hôte à la fois. Dans le but de résoudre ce problème, l'invention prévoit des premiers moyens de réception et transmission à la carte pour traitement d'un premier flux de données provenant d'un premier terminal hôte et des seconds moyens de réception par le lecteur d'un second flux de données provenant d'un second terminal hôte.

Ces premiers et seconds moyens comprennent dans ce mode une seule puce Bluetooth ainsi que des moyens de contrôle des flux (gestionnaire ou planificateur de flux et/ou de tâches). Dans l'exemple, le contrôleur de flux GF1 est placé de manière à s'interfacer entre le microcontrôleur Bluetooth BT1 de type standard et la partie lecteur LSC du porte badge. Le contrôleur de flux peut être ou comprendre une composante matérielle et/ou logicielle.

Dans l'exemple encore, le contrôleur de flux (gestionnaire) GF1 comprend un microcontrôleur µC1 ainsi que des mémoires de programme EEPROM et de travail RAM. Il comprend en particulier une mémoire tampon MP destinée à recevoir et faire attendre des flux de données provenant des différents échanges entre terminaux et badge. Il comprend de préférence un programme de contrôle de flux PCF1 pour permettre au microcontrôleur µC1 d'exécuter des fonctions ou étapes de contrôle de flux ou d'exécution de tâches diverses.

Il comprend également de préférence des moyens de détection et/ou d'indication d'un statut de disponibilité de la carte. Ce moyen de détection peut être réalisé par un registre d'état de disponibilité RE et/ ou un registre de l'état état des échanges qui peut être renseigné en permanence par le gestionnaire de contrôle de flux GF1 en application du programme PCF1 décrit ci-après.

Par exemple, quand une commande est transmise à la carte, le contrôleur de flux met une information ou un bit représentatif dans le registre d'état RE pour montrer une indisponibilité de la carte. A l'inverse, lorsque la carte répond à la commande ou une requête, cette réponse passe par le gestionnaire qui est informé de la réponse et lui laisse supposer une fin d'indisponibilité de la carte. Ce nouvel état peut être conservé en mémoire dans ce registre d'état sous forme d'une information correspondante.

Le contrôleur de flux GF1 comprend de préférence également des moyens permettant de savoir à quel terminal renvoyer ou rediriger les réponses de la carte. A cet effet, le contrôleur de flux est capable de créer un canal logique spécifique par terminal ou par session de communication ou a réception de chaque flux.

Un canal est créé par exemple en prélevant une information de l'émetteur contenue dans un champ particulier des messages ou requête. La puce de communication notamment Bluetooth est capable d'identifier sur quel canal elle a reçu la requête, et elle assurera la réponse sur le même canal.

Pour établir une session de communication, les flux peuvent être chiffrés avec une clé d'appairage entre un terminal et le lecteur. Les flux peuvent comprendre, sous une forme ou une autre selon la technologie, une indication de l'émetteur dans une partie du flux.

Dans le cas d'une puce Bluetooth, on peut utiliser deux canaux de communication différents (ex: deux canaux RFCOM) qui sont explicitement gérés / sélectionnés par le contrôleur de flux GF1 au travers des commandes de type HCl (Host Controller interface) utilisées pour communiquer avec la puce Bluetooth. En fait, de manière plus détaillée, le contrôleur de flux GF1 dialogue avec la puce Bluetooth BT1 en utilisant les commandes HCl. Ces commandes permettent notamment d'adresser les bons canaux RFCOM pour y renvoyer les données qui conviennent.

Ainsi, lorsque le contrôleur de flux GF1 reçoit une requête de la puce BT, il peut y accéder par une commande HCl. Comme chaque terminal hôte est associé à un canal RFCOM, le contrôleur de flux GF1 identifie le terminal hôte en fonction du canal avec lequel il est en train d'interagir grâce aux commandes HCl.

Ensuite, le contrôleur de flux GF1 envoie la requête reçue vers le lecteur LSC en utilisant un canal logique ISO associé à cet hôte (éventuellement rampé, si l'hôte utilise par ailleurs des canaux logiques).

Pour la réponse, comme il ne peut y avoir qu'une commande traitée à la fois par la carte, il est possible d'identifier à quel terminal hôte retourner la réponse. Lorsque le contrôleur de flux GF1 reçoit la réponse de la carte, il sait à quel canal RFCOM elle correspond (puisqu'il n'y a qu'une seule commande traitée à la fois et dans un ordre déterminé). Il peut alors utiliser les commandes HCl pour renvoyer la réponse que le bon canal RFCOM.

D'autre part, concernant des canaux logiques conformes à l'SO 7816, ils sont identifiables par le champ CLA des commandes/réponses de type APDU ; ils permettent d'avoir des applications sélectionnées différentes sur chaque canal ; Une possibilité exploitée par l'invention est l'utilisation d'un canal différent par chaque hôte conduisant à une séparation des contextes d'exécution. Comme un hôte n'a pas conscience de la présence de l'autre et donc de l'utilisation des canaux logiques pour séparer les contextes d'exécutions, le contrôleur de flux GF1 peut gérer les canaux logiques notamment en effectuant une association entre chaque canal RFCOM et un canal ISO.

Il est important que le dispositif mette en oeuvre un moyen ou une application permettant de renvoyer une réponse de la carte au bon terminal. Dans un cas, la réponse peut être chiffrée avec la clé correspondant à celle qui a permis de déchiffrer le flux transmis à la carte.

Pour effectuer une gestion correcte des redirections de flux, le gestionnaire peut prévoir, lors de la création ou ouverture d'un canal de communication, d'y associer la ou les clés, paramètres, spécificités relatifs au terminal émetteur hôte ou relatifs aux données reçues (par exemple clés de chiffrement, parité, protocole, vitesse ou indicateur...).

Avant de transmettre un flux, un canal est créé ou alternativement, un moyen servant à identifier l'émetteur est conservé en mémoire du contrôleur de flux. Comme aucun autre flux n'est transmis par le contrôleur de flux avant une réception de la réponse de la carte dans le gestionnaire, ce dernier sait que la réponse doit suivre le même canal ou même traitement protocolaire et/ou de sécurité que le dernier flux ou paquet de données transmis à la carte.

Conformément à une caractéristique prévue par l'invention, les moyens de contrôle de flux de données GF1 sont aptes ou configurés pour assurer une gestion ou planification des échanges entre la carte et au moins deux ou plusieurs terminaux.

Selon une caractéristique de ce mode de réalisation, le dispositif de l'invention, prévoit des moyens permettant de transmettre un second flux de données à la carte pour traitement et provenant d'un second terminal uniquement en cas de disponibilité de la carte. Cette disponibilité est déduite après une détection de la réponse de la carte au flux de données qui lui a été transmis en dernier. En effet, une détection de réponse de la carte qui est reçue d'abord dans le lecteur puis reçue par le contrôleur de flux, indique assurément un état de disponibilité de la carte. Cet état est exploité par l'invention comme indiqué ultérieurement.

Cette réponse peut être reçue également dans une mémoire tampon de réception du gestionnaire qui surveille le niveau de remplissage ou mise à jour. Les flux sont gérés dans les mémoires tampons de manière classique de préférence de type FIFO par exemple.

Dès qu'un flux de données est reçu dans le contrôleur de flux subséquemment à l'envoi d'un flux à la carte et remplit une partie de mémoire tampon, le microcontrôleur µC1 le détecte et inscrit une information de disponibilité dans le registre d'état RE. Le microcontrôleur µC1 procède ensuite à une étape suivante du procédé en application du programme correspondant.

Alternativement, l'information de disponibilité peut provenir du lecteur lui-méme ; par exemple en émettant un signal spécifique à destination du contrôleur de flux GF1. Le lecteur peut en effet gérer une information de disponibilité pour ses besoins propres et partager cette information avec le contrôleur de flux. Ainsi, le test de disponibilité décrit dans les figures peut consister à vérifier la réception d'une information du lecteur LSC et en réponse à cette information, le contrôleur de flux sait quand il peut ou non envoyer les flux en attente ou laisser passer les flux à venir. Cette information peut être consignée de la même manière au niveau du contrôleur de flux par exemple dans le registre RE. Le cas échéant, le lecteur et le contrôleur de flux peuvent constituer une même entité.

Une autre caractéristique prévue par l'invention est de gérer le problème des requêtes de mise à zéro (RESET) provenant des terminaux hôtes. Il est préférable d'empêcher une mise à zéro systématique lorsque celle-ci a été déjà effectuée par un premier terminal au cours d'une session précédente. Il est nécessaire d'empêcher une mise à zéro tant qu'une session avec un terminal comprenant plusieurs échanges n'est pas entièrement terminée au risque d'effacer une partie de traitement d'une session d'un autre terminal.

A cet effet, l'invention prévoit de conserver en mémoire un historique des échanges et/ou état des sessions et/ou de mises à zéro et de consulter cet historique de manière à empêcher une nouvelle mise à zéro qui serait imposée à la carte alors qu'elle n'est pas opportune ou indispensable.

De la même manière, un registre d'état de la session (en cours ou achevée) peut être renseigné et consulté systématiquement au cours de la mise en oeuvre du procédé de l'invention.

L'invention prévoit donc des moyens de gestion des requêtes de mise à zéro (RESET) demandées par les terminaux hôtes T1, T2; ces moyens permettent non seulement d'empêcher la mise à zéro mais peuvent aussi faire croire au terminal qu'elle a été effectuée par la carte. Ces moyens notamment sous forme de logiciel, peuvent comprendre un registre d'état de mise à zéro et des moyens de génération et/ou d'envoi d'un message de type ATR identique à celui émis par la carte. Dans un mode de réalisation, ce message est envoyé notamment lorsque la carte est indisponible car en cours de traitement et/ou qu'une mise à zéro a été préalablement effectuée au cours d'une session précédente. Pour s'exécuter comme indiqué ci-dessus, le microcontrôleur µC1 exécute un programme qui prévoit de consulter un ou des états de registre d'état ou un registre contenant un historique des échanges.

Dans les exemples, les contrôleurs de flux GF1, GF2 ont été ajoutés en s'interfaçant entre des composants existants (BT1, BT2 et lecteur LSC), ce qui a pour avantage une utilisation immédiate. Toutefois, tout ou partie des fonctionnalités et/ou constituants de ces contrôleurs de flux GF1/ GF2 peut être intégré sous forme logicielle et/ou matérielle notamment directement dans les moyens de communication radiofréquence. De même, tout ou partie de ces fonctionnalités et/ou de ces constituants ci-dessus peut être intégrés sous forme logicielle et/ou matérielle dans le lecteur LSC ou une sous partie du dispositif de communication PB1, PB2 avec plusieurs terminaux hôtes.

A la figure 2, dans un autre exemple de réalisation, le dispositif de communication 1 B comprend des moyens similaires à ceux de la figure 1 à la différence principale qu'il comprend deux contrôleurs Bluetooth BT2, BT3. Les moyens de ce dispositif sont identiques à ceux de la figure précédente quand ils portent le même numéro de référence. Ce dispositif utilise au moins deux contrôleurs Bluetooth standards qui comprennent chacun leur antenne physique 3.

Le contrôleur de flux GF2 comprend deux ports d'entrée/sortie pour connecter chaque puce Bluetooth BT2, BT3. Le contrôleur de flux GF2 comprend sensiblement les mêmes moyens que le contrôleur de flux GF1 et fonctionne sensiblement de la même manière (microcontrôleur µC2, RAM, ROM, EEPROM, Registre, Mémoire tampon, Programme de contrôle de flux PCF2, sélecteur de port de sortie vers les puces Bluetooth) sauf qu'il doit diriger les réponses vers le bon contrôleur Bluetooth pour parvenir au bon terminal émetteur.

Chaque puce Bluetooth BT2, BT3 est apte à connecter un seul terminal T1, T2 respectivement contrairement à BT1. A cette fin, le contrôleur de flux GF2 peut conserver en mémoire une information relative au premier contrôleur Bluetooth BT2 associé au flux reçu ainsi que son ordre de transmission (passage) éventuel vers la carte par rapport à un autre flux associé au second contrôleur Bluetooth BT3. Le contrôleur de flux GF2 peut associer à chaque flux, soit un numéro de port, soit un contrôleur Bluetooth et/ou même éventuellement un identifiant des différents terminaux en cours de communication.

Ainsi grâce à une transmission séquentielle et ordonnée des flux ou messages à la carte dans un ordre correspondant à celui de réception, le gestionnaire peut associer la réponse de la carte au message préalablement transmis à la carte et lui attribuer une redirection correspondante selon le terminal et/ou contrôleur qui était associé au flux entrant et transmis à la carte en dernier lieu.

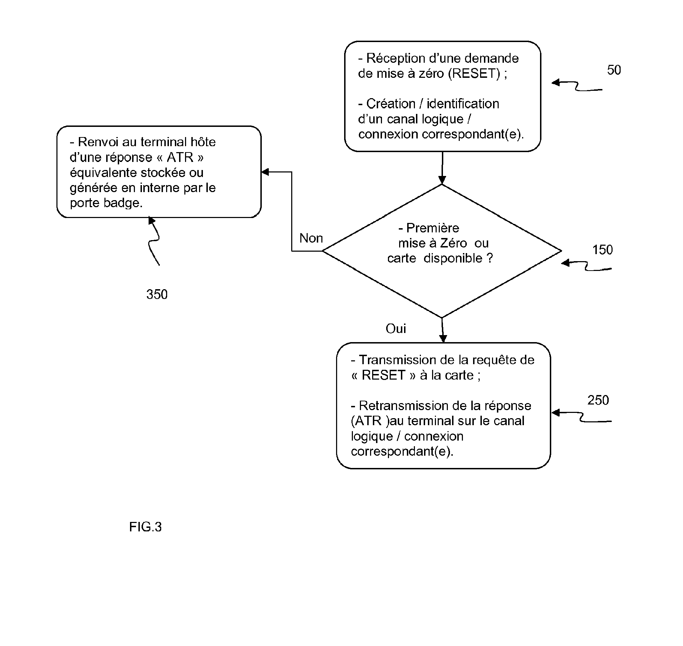

L'organigramme à la figure 3 illustre le fonctionnement des dispositifs de communication radiofréquence PB1 concernant un programme de gestion PSET des requêtes APDU de mise à zéro (RESET) et réponse ATR propre au domaine des cartes à puces conformes au standard ISO 7816.

A l'étape 50, un terminal T2, entre en communication avec le porte badge PB1 pour autoriser une utilisation du T2; Après un appairage préalable de préférence, le lecteur PB1 reçoit du terminal T2 une requête de mise à zéro (RESET) à destination de la carte. Cette requête est reçue et interceptée par le contrôleur de flux GF1. Un canal logique et/ ou connexion correspondant à cette requête est créé/ identifié ou affectée par le contrôleur de flux GF1 et un terminal y est associé notamment par l'intermédiaire d'un identifiant.

A l'étape suivante 150, le programme comprend un test pour déterminer si une mise à zéro préalable a déjà été effectuée après la mise sous tension de la carte et le contrôleur se branche à l'étape 250 dans le cas positif ou à l'étape 350 dans le cas contraire.

A l'étape 250, le programme prévoit une transmission de la requête de « RESET » à la carte puis de retransmission de la réponse « ATR » au terminal T2 sur le canal logique / connexion RFCOM correspondant dès sa réception. Le porte badge se place ensuite dans un état d'attente de la prochaine requête d'un terminal.

A l'étape 350, le programme prévoit de renvoyer au terminal hôte (T2) un message ATR équivalent stocké ou généré en interne que le microcontrôleur µC1 exécute. Grâce à cette disposition, la carte n'est pas mise à zéro inutilement et le terminal émetteur T2 peut poursuivre sa session sans attendre le traitement en cours par la carte d'une session d'un autre terminal.

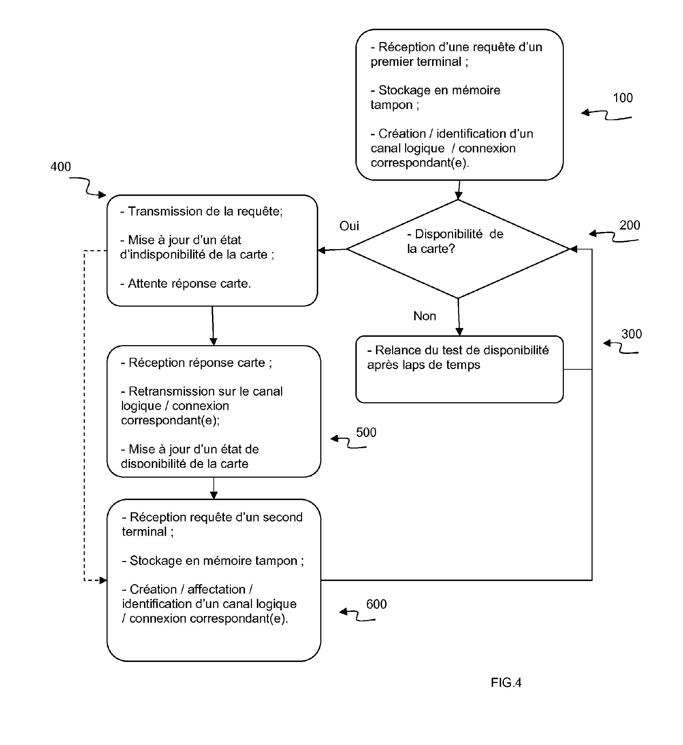

L'organigramme à la figure 4 illustre des étapes du procédé de l'invention (et/ou d'un programme interne PCF1 des moyens de contrôle de flux) pour expliquer un fonctionnement de l'invention selon un mode de réalisation notamment de la figure 1.

A l'étape 100, le porte badge reçoit via ses moyens de réception Bluetooth une requête d'un premier terminal T1 qui est interceptée par les moyens de contrôle et/ou de gestion (GF1, 6); La requête parvient en mémoire tampon ou elle demeure au moins provisoirement stockée un laps de temps; Le contrôleur de flux procède alors à la création / identification d'un canal logique / connexion correspondant par une des méthodes expliquées précédemment ou connue de l'homme de l'art.

Alternativement, dans un autre mode de mise en oeuvre, en cas de non disponibilité de la carte, la requête n'est pas stockée ou conservée pour être transmise le moment venu ; Le gestionnaire peut émettre un signal de non accusé réception de manière à permettre au terminal de réémettre sa requête. Ce message de non disponibilité peut être émis systématiquement par exemple si un signal (bit ou drapeau) de non disponibilité est actif dans un registre dédié.

A l'étape 200, les moyens de contrôle GF1 procèdent à un test visant à vérifier que la carte est disponible. Différents moyens tels que ceux décrits précédemment ou connus de l'homme de l'art peuvent être mis en oeuvre. Dans le cas négatif, le programme se branche à l'étape suivante 300 et dans le cas positif se branche à l'étape 400 ;

A l'étape 300, le programme relance le test de disponibilité ci-dessus après laps de temps et ainsi de suite.

A l'étape 400, le contrôleur de flux transmet la requête en exécution du programme vers la carte par l'intermédiaire du lecteur (LSC, 3); Simultanément, avant de préférence ou immédiatement après la transmission, le contrôleur de flux met à jour ou renseigne un état d'indisponibilité de la carte grâce à des moyens tels que ceux décrit précédemment ou équivalents connus de l'homme de l'art. Ensuite, le contrôleur de flux reste dans l'attente de la réponse de la carte après son traitement. Pendant cette attente deux cas de figures peuvent se produire comme illustrés à l'étape 500 et alternativement à l'étape 600 selon qu'un autre terminal est intervenu ou non pendant une phase d'indisponibilité de la carte ou de session non terminée entre un terminal et la carte.

A l'étape 500, la carte à répondu avant d'être sollicitée par un autre terminal T2 ; Le contrôleur de flux GF1 reçoit la réponse de la carte via le lecteur LSC et retransmet la réponse à la puce Bluetooth BT1. La réponse est dirigée sur le même canal logique ou connexion correspondant à celui ou celle ouvert(e) / identifié(e) lors de la réception de manière que la puce Bluetooth puisse émettre vers le bon terminal ; Ce canal et/ou connexion sont déterminés par l'une des différentes méthodes expliquées précédemment ou tout autre moyen connu de l'homme de l'art.

Dans le cas d'une puce BT1, le contrôleur de flux peut effectuer une encapsulation de la réponse ou autre traitement pour l'aiguiller sur l'un des deux canaux RFCOM différents dans la puce Bluetooth.

Le contrôleur de flux procède également à une mise à jour de l'état de disponibilité de la carte comme précédemment immédiatement de préférence dès la réception de la réponse ou juste avant ou après la retransmission.

A l'étape 600, la carte étant non disponible, le porte badge entame une nouvelle session de communication avec un autre terminal T2 ou reçoit la suite d'une session en cours avec cet autre terminal. On assiste donc à la réception d'une requête du terminal T2; cette dernière parvient à la mémoire tampon où elle y demeure stockée à la suite d'autres requêtes éventuelles en attente. Le contrôleur de flux procède également comme à l'étape 100 à la création / affectation d'un canal logique correspondant à ce terminal ou du moins à cette requête. Il peut aussi par exemple lui attribuer un numéro correspondant à une origine, un chemin particulier pour le retour ou avec des attributs spécifiques notamment de communication ou d'appairage.

Le programme se branche ensuite sur le test de disponibilité de la carte comme décrit précédemment à la suite de l'étape 100. Si le test est positif (carte disponible) la requête venant de T2 est transmise à la carte mais dans le cas contraire, l'invention permet de ne pas effectuer une transmission prématurée qui pourrait perturber la carte.

L'invention permet également de traiter au plus vite (dès une détection de disponibilité de carte) les différents flux de données des terminaux T1, T2 par la carte sans collision ou moins risque d'erreur de communication.

Selon une caractéristique additionnelle, l'invention prévoit qu'un second flux d'un terminal T2 soit transmis en tout état de cause à la carte après un temps déterminé alloué pour la réponse au premier flux d'un terminal T1. Cette disposition de l'invention permet d'éviter un blocage des échanges du second terminal T2 par un premier terminal T1.

Le cas échéant, un signal de mise à zéro peut être envoyé au préalable à la carte avant l'envoi du flux d'un second terminal. Un message d'erreur peut être envoyé au terminal par le contrôleur au terme d'un temps prédéterminé.

L'invention a également pour objet un programme embarqué ou destiné à être embarqué dans un dispositif portable (6, 16, PB1, PB2); Ce programme est configuré pour faire communiquer au moins deux terminaux hôtes de communication radiofréquence moyenne portée avec un objet à circuit intégré en relation avec le dispositif portable ; Ce programme comporte notamment des étapes exécutables par une unité de traitement du dispositif et correspondant aux étapes de l'un des procédés décrit ci-dessus précédemment. Ces étapes peuvent être prises de manière indépendante l'une de l'autre ou dans un ordre différent.
Le programme peut être intégré en tout ou partie du dispositif notamment dans les puces de communication ou partie lecteur de carte.

## Revendications

1. Procédé de contrôle d'un traitement de plusieurs flux de communication radiofréquences par une carte à circuits intégrés (2), lesdits flux provenant d'au moins deux terminaux (T1, T2), ladite carte étant connectée à un dispositif (PB1, PB2) doté de moyens de communication radiofréquence (BT1, BT2, BT3), aptes à connecter plusieurs terminaux hôtes (BT1, BT2), **caractérisé en ce qu'**il ledit procédé comprend l'étape suivante :
- de contrôle de la réception et/ou transmission (100, 200, 400) à la carte d'un premier et second flux de données provenant respectivement d'un premier (T1) et second (T2) terminal hôte, ladite étape de contrôle comprenant une étape de vérification de disponibilité (200) de la carte avant la transmission à la carte du second flux de données.

2. Procédé selon la revendication 1, **caractérisé en ce que** l'étape de contrôle (50, 250) bloque les requêtes de mise à zéro quand la carte n'est pas disponible et organise un renvoi (350) d'une réponse (ATR) à la place de la carte.

3. Procédé selon la revendication 1, **caractérisé en ce qu'**il met en oeuvre une étape de contrôle de la réponse de la carte au terminal hôte.

4. Procédé selon la revendication 3, **caractérisé en ce que** le contrôle de la réponse comprend une opération de redirection de la réponse de la carte vers le terminal hôte émetteur correspondant.

5. Procédé selon l'une quelconque des revendications 3 à 4, **caractérisé en ce qu'**un canal de logique de communication (100) est affecté / identifié à chaque session de communication ouverte avec un terminal hôte ou réception d'un nouveau flux.

6. Procédé selon l'une quelconque des revendications 1 à 5, **caractérisé en ce que** dans le cas de l'utilisation d'une seule puce de communication (BT1) capable d'avoir plusieurs hôtes, le procédé comprend une étape conservation d'une indication de redirection dans la puce.

7. Procédé selon l'une quelconque des revendications 1 à 6, **caractérisé en ce que** dans le cas de plusieurs puces de communication (BT2, BT3), le procédé réalise une étape de conservation d'une indication de l'origine des flux.

8. Procédé selon l'une quelconque des revendications précédentes, **caractérisé en ce que** le second flux du terminal (T2) est transmis en tout état de cause à la carte après un temps déterminé alloué pour la réponse au premier flux du terminal T1.

9. Procédé selon l'une quelconque des revendications précédentes, **caractérisé en ce que** les moyens de contrôle (GF1, GF2) comportent un registre d'état ou un historique des flux transmis et/ou reçus de la carte.

10. Système de traitement de plusieurs flux de communication radiofréquences (1A, 1B) par une carte à circuits intégrés (2), lesdits flux provenant d'au moins deux terminaux (T1, T2), ladite carte étant connectée à un dispositif (PB1, PB2) doté de moyens de communication radiofréquence (BT1, BT2, BT3) aptes à connecter plusieurs terminaux hôtes (T1, T2), **caractérisé en ce qu'**il ledit système comprend :
- des moyens de contrôle de la réception et/ou transmission (GF1, GF2) à la carte d'un premier et second flux de données provenant respectivement d'un premier T1 et second T2 terminal hôte, lesdits moyens de contrôle de réception et transmission étant configurés pour effectuer une vérification de disponibilité (200) de la carte avant transmission à la carte du second flux de données.

11. Dispositif de contrôle de traitement (GF1, GF2) de plusieurs flux de communication radiofréquence par un objet à circuits intégrés (2), ledit dispositif étant connecté ou destiné à être connecté à cet objet, ledit dispositif comprenant ou étant destiné à connecter des moyens de communication radiofréquence (BT1, BT2, BT3) configurés pour connecter plusieurs terminaux hôtes (T1, T2) émetteurs desdits plusieurs flux,
**caractérisé en ce qu'**il comprend des moyens de contrôle de la réception et/ou transmission (µP1, µP2, PSET, PCF1) à l'objet d'un premier et second flux de données provenant respectivement d'un premier (T1) et second (T2) terminal hôte, lesdits moyens de contrôle de réception et/ou transmission étant configurés pour effectuer une vérification de disponibilité (200) de l'objet avant transmission à la carte du second flux de données.

12. Programme destiné à être embarqué dans un dispositif portable, ledit programme étant configuré pour faire communiquer au moins deux terminaux hôtes de communication radiofréquence moyenne portée avec un objet à circuit intégré en relation avec le dispositif portable, ledit programme comportant des étapes exécutables par une unité de traitement du dispositif et correspondant aux étapes du procédé selon l'une quelconque des revendications 1 à 9.
